# EUROPEAN PATENT APPLICATION

(11) **EP 4 791 079 A1**
(43) Date of publication of application: **12.08.2026**
(21) Application number: 24874110.0
(22) Date of filing: 08.10.2024
(51) Int. Cl.: H04W 28/24, H04L 41/08, H04L 5/00

(54) **COMMUNICATION METHOD AND APPARATUS, COMMUNICATION DEVICE, AND READABLE STORAGE MEDIUM**

(30) Priority: 07.10.2023 CN 202311288551
(71) Applicant: CHINA MOBILE COMMUNICATION CO., LTD. RESEARCH INSTITUTE, Beijing 100053 (CN); CHINA MOBILE COMMUNICATIONS GROUP CO., LTD, Beijing 100032 (CN)
(72) Inventor: WANG, Dan, Xicheng District, Beijing 100032 (CN); LU, Lu, Xicheng District, Beijing 100032 (CN); SUN, Tao, Xicheng District, Beijing 100032 (CN)
(74) Representative: Herrero & Asociados, S.L.
(86) International application number: PCT/CN2024/123318
(87) International publication number: WO 2025/073294

(57) **Abstract**

The present disclosure relates to the technical field of communications, and provides a communication method and apparatus, a communication device, and a readable storage medium. The communication method in embodiments of the present disclosure comprises: a terminal reports first information, wherein the first information is used for indicating the capability of the terminal to support uplink PDU set processing.

## Description

### CROSS REFERENCE TO RELATED APPLICATIONS

This application claims priority to Chinese Patent Application No. 202311288551.8, filed on October 7, 2023, in the National Intellectual Property Administration of China, the contents of which are herein incorporated by reference in their entireties.

### TECHNICAL FIELD

The present disclosure relates to the technical field of communications, and in particular to a communication method, a communication apparatus, a communication device, and a readable storage medium.

### BACKGROUND

In the related art, for Quality of Service (QoS) handling of a downlink Protocol Data Unit (PDU) set, a policy may be generated by a Policy Control Function (PCF). A User Plane Function (UPF) may be instructed by a Session Management Function (SMF) to identify a 5th Generation Mobile Communication Technology Quality of Service Identifier (5G Quality of Service Identifier, 5QI) and a protocol of Real Time Protocol (RTP) packet. However, it remains unclear how to implement QoS handling for an uplink PDU set.

### SUMMARY

Some embodiments of the present disclosure provide a communication method, a communication apparatus, a communication device, and a readable storage medium, so as to solve the problem of how to implement QoS handling for an uplink PDU set.

To solve the above technical problem, the present disclosure is implemented as follows.

In a first aspect, the present disclosure may provide a communication method, applied to a terminal. The communication method may include: reporting, by a terminal, first information, the first information is configured to indicate a capability of the terminal to support uplink Protocol Data Unit (PDU) set handling.

In a second aspect, the present disclosure may provide a communication method, applied to a second network function. The communication method may include: generating, by a second network function, a network policy for uplink Protocol Data Unit (PDU) set handling and/or downlink PDU set handling based on local configuration and/or a capability of a terminal, reported by the terminal, to support the uplink PDU set handling; and transmitting, by the second network function, the network policy for the uplink PDU set handling and/or the downlink PDU set handling.

In a third aspect, the present disclosure may provide a communication method, applied to a third network function. The communication method may include: transmitting, by the third network function, second information to a second network function. The second information may include at least one of the following: first indication information, configured to indicate performing uplink Protocol Data Unit (PDU) set handling and/or downlink PDU set handling; flow description; or protocol description.

In a fourth aspect, the present disclosure may provide a communication method, applied to a base station. The communication method may include: receiving, by the base station, QoS information of an uplink Protocol Data Unit (PDU) set transmitted by a second network function; and transmitting, by the base station, the QoS information of the uplink PDU set to a terminal.

In a fifth aspect, the present disclosure may provide a communication apparatus applied to a terminal. The communication apparatus may include: a reporting module, configured to report first information. The first information may be configured to indicate a capability of the terminal to support uplink Protocol Data Unit (PDU) set handling.

In a sixth aspect, the present disclosure may provide a communication apparatus applied to a second network function. The communication apparatus may include: a generation module, configured to generate a network policy for uplink Protocol Data Unit (PDU) set handling and/or downlink PDU set handling based on configuration and/or a capability of the terminal, reported by a terminal, to support the uplink PDU set handling; and a second transmission module, configured to transmit a network policy for the uplink PDU set handling and/or the downlink PDU set handling.

In a seventh aspect, the present disclosure may provide a communication apparatus applied to a third network function. The communication apparatus may include: a fourth transmission module, configured to transmit second information to a second network function. The second information may include at least one of the following: first indication information, configured to indicate uplink Protocol Data Unit (PDU) set handling and/or downlink PDU set handling; flow description; or protocol description.

In an eighth aspect, the present disclosure may provide a communication apparatus applied to a base station. The communication apparatus may include: a third receiving module, configured to receive Quality of Service (QoS) information of an uplink Protocol Data Unit (PDU) set transmitted by a second network function; and a fifth transmission module, configured to transmit the QoS information of the uplink PDU set to a terminal.

In a ninth aspect, the present disclosure may provide a communication device. The communication device may include: a processor, a memory, and a program or instruction stored on the memory and executable on the processor. When executed by the processor, the program or instruction may be configured to perform operations of the method as described in the first aspect, or perform operations of the method as described in the second aspect, or perform operations of the method as described in the third aspect, or perform operations of the method as described in the fourth aspect.

In a tenth aspect, the present disclosure may provide a readable storage medium. The readable storage medium may be configured to store a program or instruction. When executed by a processor, the program or instruction may be configured to perform operations of the method as described in the first aspect, or perform operations of the method as described in the second aspect, or perform operations of the method as described in the third aspect, or perform operations of the method as described in the fourth aspect.

In some embodiments of the present disclosure, the capability of the terminal to support the uplink PDU set handling may be reported. Since the terminal is the core of the uplink PDU set handling, the uplink PDU set handling between the terminal and the base station may depend on the terminal to a great extent. Therefore, based on the capability of the terminal, reported by the terminal to support the uplink PDU set handling, a corresponding network policy for the uplink PDU set handling may be generated by the network side. That is, QoS information of the uplink PDU set may be generated, thereby executing QoS handling for the uplink PDU set.

### BRIEF DESCRIPTION OF THE DRAWINGS

FIG. 1 is a block diagram of a wireless communication system to which some embodiments of the present disclosure are applicable.
FIG. 2 is a flow chart of a communication method provided by some embodiments of the present disclosure.
FIG. 3 is a schematic diagram of a handling mode of an uplink Protocol Data Unit (PDU) set by a terminal in some embodiments of the present disclosure.
FIG. 4 is a flow chart of another communication method provided by some embodiments of the present disclosure.
FIG. 5 is a flow chart of another communication method provided by some embodiments of the present disclosure.
FIG. 6 is a flow chart of another communication method provided by some embodiments of the present disclosure.
FIG. 7 is a schematic diagram of negotiating a handling mode of an uplink PDU set in Embodiment 1 of the present disclosure.
FIG. 8 is a schematic diagram of negotiating the handling mode of the uplink PDU set in Embodiment 2 of the present disclosure.
FIG. 9 is a structural schematic diagram of a communication apparatus provided by some embodiments of the present disclosure.
FIG. 10 is a structural schematic diagram of another communication apparatus provided by some embodiments of the present disclosure.
FIG. 11 is a structural schematic diagram of another communication apparatus provided by some embodiments of the present disclosure.
FIG. 12 is a structural schematic diagram of another communication apparatus provided by some embodiments of the present disclosure.
FIG. 13 is a structural schematic diagram of a communication device provided by some embodiments of the present disclosure.

### DETAILED DESCRIPTION

The technical solutions in some embodiments of the present disclosure will be clearly and completely described below with reference to the accompanying drawings in some embodiments of the present disclosure. Obviously, the described embodiments are some embodiments of the present disclosure, rather than all of the embodiments of the present disclosure. All other embodiments obtained by those skilled in the art without creative work based on the embodiments of the present disclosure shall fall within the protection scope of the present disclosure.

The terms "first" and "second" in the specification and claims of the present disclosure are used to distinguish similar objects, and are not used to describe a specific order or sequence. It should be understood that the data used in this way may be interchanged under appropriate circumstances, so that the embodiments of the present disclosure may be performed in an order other than those illustrated or described herein. The objects distinguished by "first" and "second" are usually belong to the same type, and the number of objects is not limited. For example, the number of a first object may be one or more. In addition, the term "and/or" in the specification and claims indicates at least one of the connected objects. The symbol "/" generally indicates that the associated objects before and after "/" are in an "or" relationship.

It should be noted that the technologies described in some embodiments of the present disclosure are not limited to a Long Term Evolution (LTE) system / an LTE-Advanced (LTE-A) system, and may also be applied to other wireless communication systems, such as a Code Division Multiple Access (CDMA) system, a Time Division Multiple Access (TDMA) system, a Frequency Division Multiple Access (FDMA) system, an Orthogonal Frequency Division Multiple Access (OFDMA) system, a Single-carrier Frequency Division Multiple Access (SC-FDMA) system, or other systems. The terms "system" and "network" in some embodiments of the present disclosure may be often used interchangeably. The described technologies may be applied to the above-mentioned systems and radio technologies, and may also be applied to other systems and wireless technologies, such as a New Radio (NR) system, a 6th Generation (6G) communication system, or the like.

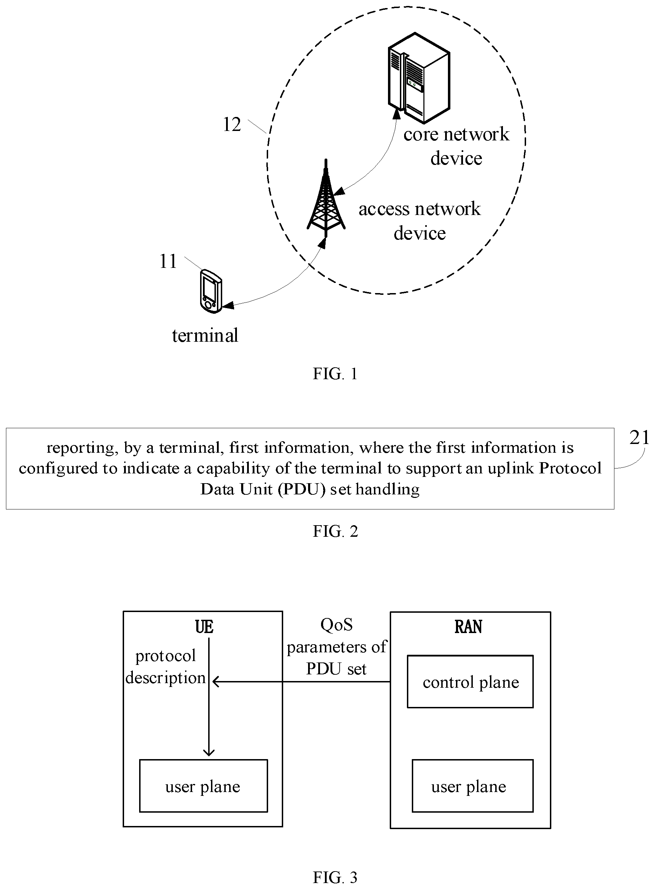

FIG. 1 is a block diagram of a wireless communication system to which some embodiments of the present disclosure are applicable. The wireless communication system may include a terminal 11 and a network-side device or network device 12. The terminal 11 may be terminal-side equipment such as a mobile phone, a tablet personal computer, a laptop computer, a notebook computer, a personal digital assistant (PDA), a handheld computer, a netbook, an ultra-mobile personal computer (UMPC), a mobile internet device (MID), an augmented reality (AR) device, a virtual reality (VR) device, a robot, a wearable device, a flight vehicle, a vehicle user equipment (VUE), a ship-borne device, a pedestrian user equipment (PUE), a smart home (home appliances with a wireless communication function, such as a refrigerator, a television, a washing machine, furniture, etc.), a game machine, a personal computer (PC), an automated teller machine, or a self-service machine, etc. Wearable devices may include a smart watch, a smart bracelet, a smart earphone, smart glasses, smart jewelry (a smart bangle, a smart bracelet, a smart ring, a smart necklace, a smart anklet, a smart foot chain, etc.), a smart wristband, smart clothing, or the like. A vehicle user equipment may also refer to a vehicle terminal, a vehicle controller, a vehicle module, a vehicle component, a vehicle chip, a vehicle unit, or the like. It should be noted that the type of the terminal 11 is not limited in some embodiments of the present disclosure.

A network-side device 12 may include an access network device or a core network device. The access network device may include a base station, a Wireless Local Area Network (WLAN) access point, a Wireless Fidelity (WiFi) node, or the like. The base station may refer to a Node B, an Evolved Node B (eNB), an access point, a Base Transceiver Station (BTS), a radio base station, a radio transceiver, a Basic Service Set (BSS), an Extended Service Set (ESS), a Home Node B, a Home Evolved Node B, a Transmitting Receiving Point (TRP), or some other appropriate terms in the field. As long as the same technical effect is achieved, the base station may not be limited to a specific technical term. The core network device may include at least one of the following: a core network node, a core network function, a Mobility Management Entity (MME), an Access and Mobility Management Function (AMF), a Session Management Function (SMF), a User Plane Function (UPF), a Policy Control Function (PCF), a Policy and Charging Rules Function (PCRF), an Edge Application Server Discovery Function (EASDF), a Unified Data Management (UDM), a Unified Data Repository (UDR), a Network Repository Function (NRF), a Network Exposure Function (NEF), a Local NEF (L-NEF), a Binding Support Function (BSF), an Application Function (AF), or the like.

The communication method, communication apparatus, communication device, and readable storage medium provided by some embodiments of the present disclosure will be described in detail below with reference to the accompanying drawings through some embodiments and application scenarios thereof.

As shown in FIG. 2. FIG. 2 is a flow chart of a communication method provided by some embodiments of the present disclosure. The method may be applied to or performed by the terminal. As shown in FIG. 2, the method may include the following operation.

In an operation 21, first information is reported by a terminal, the first information is configured to indicate a capability of the terminal to support uplink Protocol Data Unit (PDU) set handling.

Since the terminal is the core of the uplink PDU set handling, the uplink PDU set handling between the terminal and the base station may depend on the terminal to a great extent. Therefore, based on the capability of the terminal, reported by the terminal, to support the uplink PDU set handling, a corresponding network policy for the uplink PDU set handling may be generated by the network side. That is, QoS information of an uplink PDU set may be generated, thereby supporting the terminal to execute a QoS guarantee for the uplink PDU set, and executing QoS handling for the uplink PDU set.

The capability of the terminal to support the uplink PDU set handling may be understood as: the attribute of the terminal for supporting the uplink PDU set handling.

In some embodiments, the first information may explicitly or implicitly indicate the capability of the terminal to support the uplink PDU set handling. In a case where the first information explicitly indicates the capability of the terminal to support the uplink PDU set handling, the first information may be a newly-added field or may reuse an existing field.

In some embodiments, the first information may be sent or transmitted through a Session Management (SM) message during a PDU session establishment procedure or a PDU session update procedure. For example, the first information may be a newly-added field in the SM message or an existing field reused from the SM message.

In some embodiments, in addition to indicating the capability of the terminal to support the uplink PDU set handling, the first information may also indicate a type of the capability of terminal to support PDU set handling. For example, the first information may indicate that the terminal supports PDU set importance, that is, the first information may indicate that the terminal supports judging the priority of data transmission based on the PDU set importance; and/or, the first information may also indicate that the terminals supports PDU set Integrated Handling Indication (PSIHI), that is, the first information may also indicate that the terminal supports judging whether to perform integrity protection on data messages or discard/omit data messages based on the indication of the PSIHI.

In some embodiments, the terminal may be configured with the capability of identifying a specific QoS flow, and may perform the uplink PDU set handling for the specific QoS flow.

In some embodiments, after the terminal reporting the capability of the terminal to support the uplink PDU set handling, the communication method may further include the following operations:
receiving, by the terminal, Quality of Service (QoS) information of an uplink PDU set transmitted by a first network function, or receiving, by the terminal, the QoS information of the uplink PDU set transmitted by the first network function through a base station; and
performing, by the terminal, the uplink PDU set handling.

It may be understood that the uplink PDU set handling may be performed by the terminal based on the received QoS information of the uplink PDU set. Performing the uplink PDU set handling based on the received QoS information of the uplink PDU set may be understood as: the performing of the uplink PDU set handling being associated with the QoS information of the uplink PDU set, or the uplink PDU set handling being performed with reference to the QoS information of the uplink PDU set.

In some embodiments, the first network function may include, but is not limited to, the AMF, the SMF, or the like. The QoS information may be generated by a second network function (such as the PCF) and transmitted to the first network function.

The QoS information may include QoS parameters, such as 5QI, PDU set importance, PDU Set Error Rate (PSER), PDU Set Delay Budget (PSDB), or the like.

Therefore, the QoS handling for the uplink PDU set may be performed by the terminal based on the received QoS information of the uplink PDU set.

In some embodiments, the QoS parameters of the uplink PDU set and indication information for performing the uplink (UL) PDU set handling for a specific 5-tuple may be obtained from a core network by the terminal via a NAS message.

In some embodiments, the uplink PDU set handling may include at least one of the following: 1) based on a description of the 5QI and a Non-Access Stratum (NAS) indication of the core network, a specific uplink QoS flow may be mapped by the terminal to a Data Radio Bearer (DRB) for performing the PDU set handling; 2) based on the PDU set importance, priority of data transmission may be judged by the terminal, or messages that need to be discarded or omitted may be identified by the terminal; 3) whether to perform integrity protection on data messages or discard/omit the data messages may be judged by the terminal based on the indication of the PSIHI; 4) messages that need to be scheduled rapidly may be identified by the terminal based on the received PSDB; and so on.

In some embodiments, the communication method may further include the following operations.

A first request may be transmitted by the terminal to the first network function via the NAS message. The first request may be configured to request QoS information of the PDU set. Thus, the QoS information of the uplink PDU set may be requested and obtained by the terminal.

For example, before receiving the QoS information of the uplink PDU set transmitted by the first network function, or receiving the QoS information of the uplink PDU set transmitted by the first network function through the base station, the first request may be transmitted by the terminal to the first network function via the NAS message. After that, the first request may be forwarded or transmitted by the first network function to the second network function (such as the PCF). The first request may be configured to assist in generating the network policy for the uplink PDU set handling and/or the downlink PDU set handling.

In some embodiments of the present disclosure, the specific messages which belong to a same PDU set may be identified by the terminal based on protocol description, so as to perform the uplink PDU set handling. The protocol description may be obtained by the terminal directly from an application layer, a business layer, or the like, or may be obtained by the terminal from the core network, such as obtained from the core network via the NAS message.

In some embodiments, the communication method may further include at least one of the following operations.
(1) The uplink PDU set handling may be performed by the terminal based on the QoS information of the uplink PDU set; where performing the uplink PDU set handling based on the QoS information of the uplink PDU set may be understood as: the performing the uplink PDU set handling being associated with the QoS information of the uplink PDU set, or the uplink PDU set handling being performed with reference to the QoS information of the uplink PDU set.
(2) The uplink PDU set handling may be performed by the terminal based on the QoS information of the uplink PDU set and the protocol description.
(3) The uplink PDU set handling may be performed by the terminal based on the protocol description.

The above operation (1) may be understood that, the uplink PDU set handling may be performed by the terminal based on the QoS information of the uplink PDU set only. The protocol description in the above operations (2) and (3) may be obtained by the terminal from at least one of the following: the terminal itself, the business layer, the application layer, and an upper layer. Combining with the protocol description, it is possible to facilitate the identification of a protocol type and service characteristics, thereby enabling the selection of an appropriate QoS guarantee to perform the uplink PDU set handling.

Based on the above operations (1) to (3), it may be concluded that the uplink PDU set handling may be performed by the terminal based on at least one of the obtained protocol description and the QoS information of the uplink PDU set.

For example, as shown in FIG. 3, when the QoS parameters of the uplink PDU set are obtained by the terminal UE from a Radio Access Network (RAN), the protocol description may also be obtained by the terminal UE from the upper layer of the terminal or the application layer, so as to perform the QoS handling for the uplink PDU set by combining the QoS parameters of the PDU set and the protocol description.

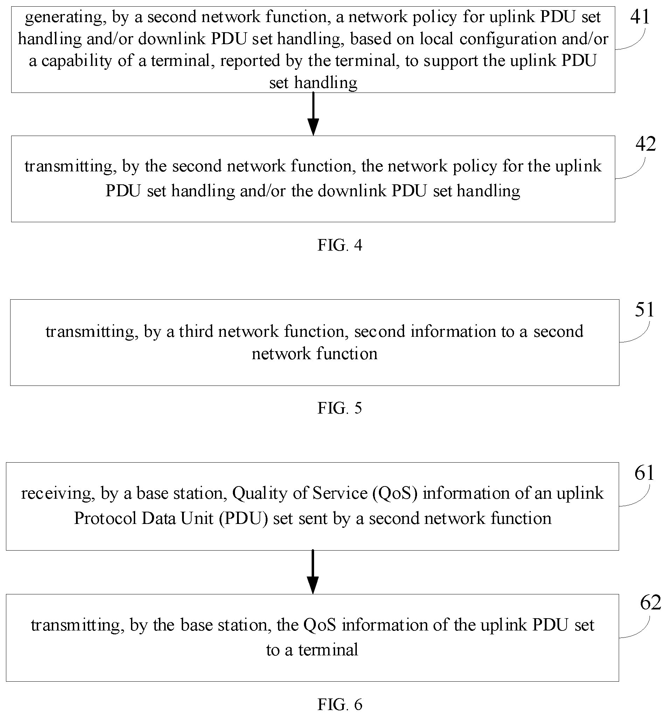

As shown in FIG. 4, FIG. 4 is a flow chart of another communication method provided by some embodiments of the present disclosure. The communication method may be applied to or performed by a second network function. The second network function may be the PCF or other network functions with the policy control function. As shown in FIG. 4, the method may include the following operations.

In an operation 41, the network policy for the uplink PDU set handling and/or the downlink PDU set handling may be generated by a second network function, based on local configuration and/or the capability of the terminal, reported by the terminal, to support uplink PDU set handling.

In an operation 42, the network policy for the uplink PDU set handling and/or the downlink PDU set handling may be transmitted by the second network function.

In some embodiments, the network policy for the uplink PDU set handling and/or the downlink PDU set handling may be understood as: QoS information (such as QoS parameters) of the uplink PDU set and/or the downlink PDU set. The network policy for the uplink PDU set handling and/or the downlink PDU set handling may include a decision on which data stream to apply QoS handling to.

In some embodiments, the operation 42 may include at least one of the following.
1) The network policy for the uplink PDU set handling may be transmitted by the second network function to the terminal via or through the first network function.
2) The network policy for the uplink PDU set handling may be transmitted by the second network function to the base station via or through the first network function, and the network policy for uplink PDU set handling may be forwarded or transmitted to the terminal by the base station.

In some embodiments, the first network function may include, but is not limited to, the AMF, the SMF or the like.

Therefore, the QoS handling for the uplink PDU set may be performed by the terminal based on the received network policy for the uplink PDU set handling, that is, based on the QoS information of the uplink PDU set.

In some embodiments, in response to learning that the terminal performing UL (uplink) PDU set handling, the QoS parameters of the UL PDU set may be transmitted, by the second network function or the first network function, to the terminal via the NAS message.

In some embodiments, the communication method may further include the following operation.

Second information transmitted by a third network function may be received by the second network function, or the second information transmitted by the third network function may be received by the second network function through a Network Exposure Function (NEF). The second information may include at least one of the following:
first indication information, configured to indicate performing the uplink PDU set handling and/or the downlink PDU set handling;
flow description, e.g., QoS flow description; or
the protocol description.

In this way, after receiving the second information, the network policy for the uplink PDU set handling and/or the downlink PDU set handling may be generated by the second network function (such as the PCF) with the assistance of the second information.

In some embodiments, the third network function may be the Application Function (AF).

In some embodiments, the communication method may further include the operation as follow.

The first request transmitted by the terminal may be received by the second network function through the first network function. The first request may be configured to assist the second network function in generating the network policy for the uplink PDU set handling and/or the downlink PDU set handling.

As shown in FIG. 5, FIG. 5 is a flow chart of another communication method provided by some embodiments of the present disclosure. The method may be applied to or performed by the third network function. The third network function may be the AF or another network function with the application function. As shown in FIG. 5, the method may include the following operation.

In an operation 51, second information may be transmitted by the third network function to the second network function.

In some embodiments, the second network function may be the PCF or other network functions with the policy control function. The second information may include at least one of the following:
first indication information, configured to indicate performing the uplink PDU set handling and/or the downlink PDU set handling;
flow description, e.g., QoS flow description; or
the protocol description.

Therefore, the network policy for the uplink PDU set handling and/or the downlink PDU set handling may be generated by the second network function (such as the PCF) with the assistance of the second information. After that, the network policy for the uplink PDU set handling may be transmitted to the terminal, so that QoS handling for the uplink PDU set may be performed by the terminal.

In some embodiments, the second information may be transmitted by the third network function (such as the AF) to the second network function (such as the PCF) through the NEF.

As shown in FIG. 6, FIG. 6 is a flow chart of another communication method provided by some embodiments of the present disclosure. The method may be applied to or performed by the base station. As shown in FIG. 6, the method may include the following operations.

In an operation 61, the QoS information of the uplink PDU set transmitted by the second network function may be received by the base station.

In an operation 62, the QoS information of the uplink PDU set may be transmitted by the base station to the terminal.

Therefore, the QoS handling for the uplink PDU set may be performed by the terminal based on the received QoS information of the uplink PDU set.

In some embodiments, the second network function may be, but is not limited to, the PCF or other network functions with the policy control function.

In some embodiments, the QoS information may include the QoS parameters, such as the 5QI, a PDU Set Error Rate (PSER), a PDU Set Delay Budget (PSDB) or the like.

For example, the QoS information of the uplink PDU set may be obtained by the base station (such as a Next Generation RAN (NG-RAN)) from the core network and forwarded or transmitted to the terminal in the PDU session establishment or the modification procedure. Therefore, the base station may support the terminal to perform a specific QoS guarantee for the uplink PDU set.

The present disclosure will be described with reference to the following embodiments.

### Embodiment 1

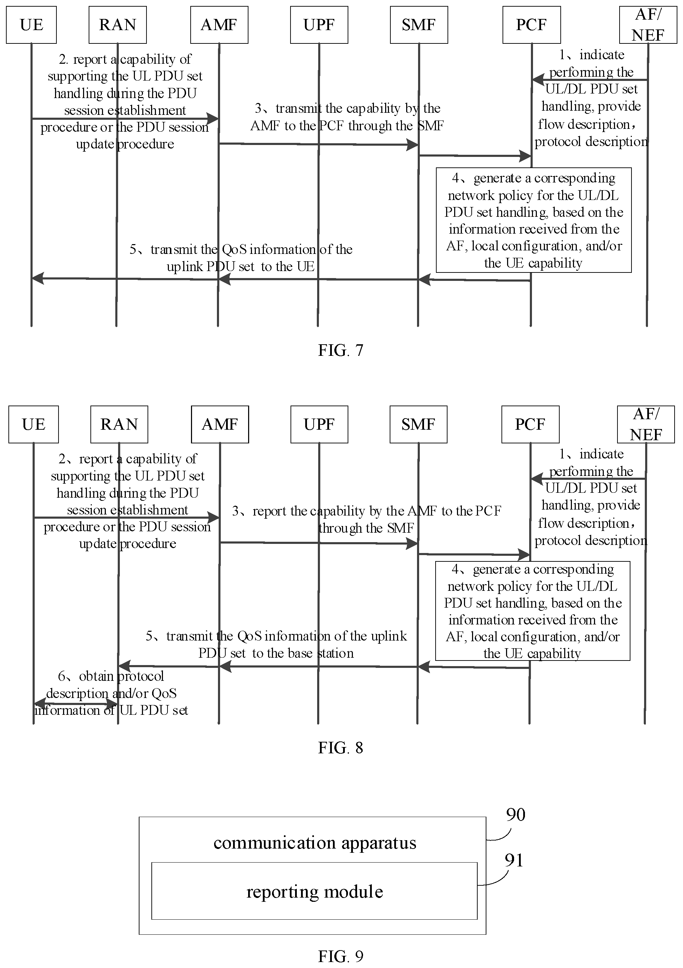

In Embodiment 1, a capability of the UL PDU set handling may be negotiated during the PDU session establishment or modification procedure. As shown in FIG. 7, the procedure may include the operations as follow.

In an operation 1, the second information may be transmitted by the AF (or through the NEF) to the PCF. The second information may include at least one of the following: the first indication information, configured to indicate performing the uplink PDU set handling and/or the downlink PDU set handling; the flow description; or the protocol description. That is, the AF may indicate UL PDU set handling and/or the DL (downlink) PDU set handling, and provide the flow description and/or the protocol description.

In an operation 2, during the PDU session establishment or the PDU session update procedure, a UE may report the capability, of the UE, of supporting the UL PDU set handling to the AMF. For example, the capability may be carried in a 5G SM capability.

In an operation 3, in some embodiments, the UE capability may be reported by the AMF to the PCF through the SMF.

In an operation 4, a corresponding network policy for the uplink PDU set handling and/or the downlink PDU set handling, i.e., the QoS information (such as QoS parameters) of the uplink PDU set and/or the downlink PDU set, may be generated by the PCF based on the information received from the AF, local configuration, and/or the UE capability.

In an operation 5, the QoS information of the uplink PDU set may be transmitted by the PCF to the UE through the AMF and the SMF, so that QoS handling for the uplink PDU set may be performed by the UE based on the received QoS information.

### Embodiment 2

In Embodiment 2, the UL PDU set handling capability may be negotiated during the PDU session establishment or the modification procedure, and the QoS information may be issued or delivered through the base station. As shown in FIG. 8, the procedure may include the operations as follow.

Operations 1-4 may be the same as operations 1-4 in Embodiment 1 above.

In an operation 5, the QoS information of the uplink PDU set may be transmitted by the PCF to the base station through the AMF and the SMF.

In an operation 6, the protocol description and/or the QoS information of the uplink PDU set may be obtained by the UE from the base station, so as to perform the QoS handling for the uplink PDU set.

It should be noted that the execution subject of the communication method provided by some embodiments of the present disclosure may be a communication apparatus, or a control module in the communication apparatus for executing the communication method. The communication apparatus provided by some embodiments of the present disclosure may be described below by taking the communication apparatus executing the communication method as an example.

As shown in FIG. 9, FIG. 9 is a structural schematic diagram of a communication apparatus provided by some embodiments of the present disclosure. The communication apparatus may be applied to or configured in a terminal. As shown in FIG. 9, the communication apparatus 90 may include a reporting module 91.

The reporting module 91 may be configured to report first information. The first information may be configured to indicate the capability of the terminal to support uplink PDU set handling.

In some embodiments, the communication apparatus 90 may further include a first receiving module and a first execution module.

The first receiving module may be configured to receive QoS information of an uplink PDU set transmitted by a first network function, or the QoS information of the uplink PDU set transmitted by the first network function may be received by the terminal through a base station.

The first execution module may be configured to perform the uplink PDU set handling.

In some embodiments, the communication apparatus 90 may further include a first transmission module.

The first transmission module may be configured to transmit a first request to the first network function via a Non-Access Stratum (NAS) message. The first request may be configured to request QoS information of a PDU set.

In some embodiments, the communication apparatus 90 may further include a second execution module.

The second execution module may be configured to perform at least one of the following operations:
performing the uplink PDU set handling based on the QoS information of the uplink PDU set;
performing the uplink PDU set handling based on the QoS information of the uplink PDU set and protocol description; or
performing the uplink PDU set handling based on the protocol description.

The protocol description may be obtained by the terminal from at least one of the following: the terminal, a business layer, an application layer, and an upper layer.

The communication apparatus 90 of some embodiments of the present disclosure may execute operations of the method embodiment shown in FIG. 2 and achieve the same technical effects. To avoid repetition, details are not described herein again.

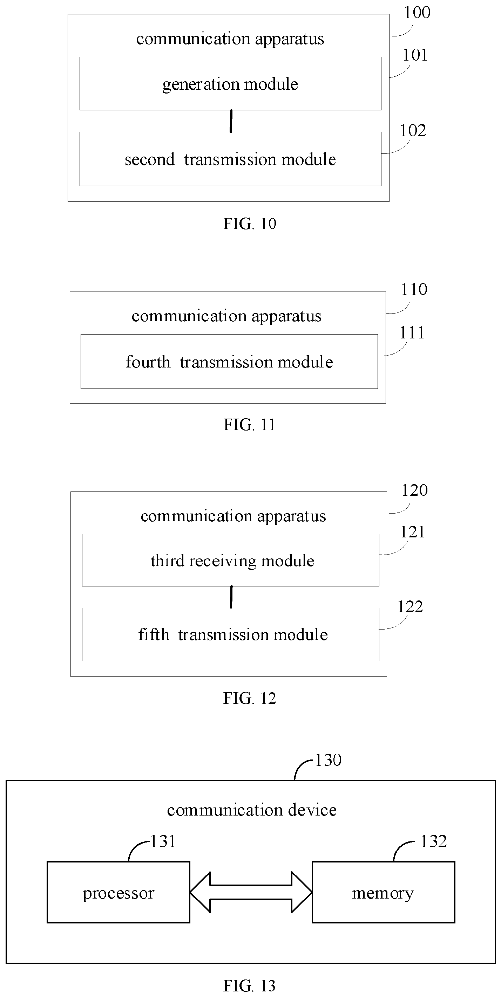

As shown in FIG. 10, FIG. 10 is a structural schematic diagram of a communication apparatus provided by some embodiments of the present disclosure. The apparatus may be applied to or configured in a second network function. The second network function may be a PCF or another network function with a policy control function. As shown in FIG. 10, the communication apparatus 100 may include a generation module 101 and a second transmission module 102.

The generation module 101 may be configured to generate a network policy for the uplink PDU set handling and/or downlink PDU set handling based on a configuration of the second network function and/or the capability of supporting the uplink PDU set handling reported by the terminal.

The second transmission module 102 may be configured to transmit the network policy for the uplink PDU set handling and/or the downlink PDU set handling.

In some embodiments, the second transmission module 102 may be configured to perform at least one of the following operations:
transmitting the network policy for the uplink PDU set handling to the terminal through the first network function; or
transmitting the network policy for the uplink PDU set handling to the base station through the first network function.

In some embodiments, the communication apparatus 100 may further include a second receiving module.

The second receiving module may be configured to receive second information transmitted by a third network function, or receive the second information transmitted by the third network function through a Network Exposure Function (NEF). The second information may include at least one of the following information:
first indication information, configured to indicate performing the uplink PDU set handling and/or the downlink PDU set handling;
flow description; or
protocol description.

In some embodiments, the third network function may be an application function AF.

In some embodiments, the communication apparatus 100 may further include a third transmission module.

The third transmission module may be configured to receive the first request transmitted by the terminal through the first network function. The first request may be configured to assist the second network function in generating the network policy for the uplink PDU set handling and/or the downlink PDU set handling.

The communication apparatus 100 of some embodiments of the present disclosure may execute processes of the method embodiment shown in FIG. 4 and achieve the same technical effects. To avoid repetition, details are not described herein again.

As shown in FIG. 11, FIG. 11 is a structural schematic diagram of a communication apparatus provided by some embodiments of the present disclosure. The communication apparatus may be applied to or configured in the third network function. The third network function may be the AF or another network function with the application function. As shown in FIG. 11, the communication apparatus 110 may include a fourth transmission module 111.

The fourth transmission module 111 may be configured to transmit second information to the second network function.

The second information may include at least one of the following information:
first indication information, configured to indicate performing the uplink PDU set handling and/or the downlink PDU set handling;
flow description; or
protocol description.

The communication apparatus 110 of some embodiments of the present disclosure may execute processes of the method embodiment shown in FIG. 5 and achieve the same technical effects. To avoid repetition, details are not described herein again.

As shown in FIG. 12, FIG. 12 is a structural schematic diagram of a communication apparatus provided by some embodiments of the present disclosure. The communication apparatus may be applied to or configured in the base station. As shown in FIG. 12, the communication apparatus 120 may include a third receiving module 121 and a fifth transmission module 122.

The third receiving module 121 may be configured to receive the QoS information of the uplink PDU set transmitted by the second network function.

The fifth transmission module 122 may be configured to transmit the QoS information of the uplink PDU set to the terminal.

The communication apparatus 120 of some embodiments of the present disclosure may execute operations of the method embodiment shown in FIG. 6 and achieve the same technical effects. To avoid repetition, details are not described herein again.

In some embodiments, as shown in FIG. 13, some embodiments of the present disclosure may further provide a communication device 130. The communication device 130 may include a processor 131, a memory 132, and a program or instruction stored on the memory 132 and executable on the processor 131. When executed by the processor 131, the program or instruction may be configured to perform the operations of the above embodiments of the communication method and achieve the same technical effects. To avoid repetition, details are not described herein again.

Some embodiments of the present disclosure may further provide a readable storage medium. The readable storage medium may be configured to store a program or instruction. When executed by a processor, the program or instruction may be configured to perform the operations of the above embodiments of the communication method, and achieve the same technical effects. To avoid repetition, details are not described herein again.

A computer-readable medium may include a permanent medium and a non-permanent medium, a removable medium and a non-removable medium, and information storage may be executed by any method or technology. The information may be computer-readable instructions, data structures, program modules, or other data. Examples of a computer storage medium may include, but not limited to, Phase-change Memory (PRAM), Static Random Access Memory (SRAM), Dynamic Random Access Memory (DRAM), other types of Random Access Memory (RAM), Read-Only Memory (ROM), Electrically Erasable Programmable Read-Only Memory (EEPROM), flash memory, or other memory technologies, Compact Disc Read-Only Memory (CD-ROM), Digital Video Disc (DVD) or other optical storage, magnetic cassette tape, magnetic tape disk storage or other magnetic storage devices, or any other non-transmission medium that can be used to store information accessible by a computing device. As defined herein, the computer-readable medium may not include a transitory computer-readable medium, such as modulated data signals and carrier waves.

It should be noted that in the present disclosure, the terms "include", "comprise" or any other variants thereof are intended to cover non-exclusive inclusion, so that a process, method, article or apparatus including a series of elements includes not only those elements, but also other elements not explicitly listed, or further includes elements inherent to such a process, method, article or apparatus. Without more limitations, an element defined by the sentence "including a..." does not exclude the existence of other identical elements in the process, method, article or apparatus including the element.

The serial numbers of the embodiments of the present disclosure are only for description, and do not represent the advantages or disadvantages of the embodiments.

From the description of the above embodiments, those skilled in the art may clearly understand that the above embodiment methods may be executed by means of software and a necessary general hardware platform, and may also be executed by hardware, but the former may be a better implement mode in many cases. Based on such understanding, the technical solution of the present disclosure essentially or the part that contributes to the related art may be embodied in the form of a software product. The computer software product may be stored in a storage medium (such as ROM/RAM, a magnetic disk, an optical disc), and include several instructions to enable a service classification device (which may be a mobile phone, a computer, a server, an air conditioner, a network device, or the like) to execute the methods described in each embodiment of the present disclosure.

The above are only some implementations of the present disclosure. It should be pointed out that for those skilled in the art, several improvements and modifications may be made without departing from the principle of the present disclosure, and these improvements and modifications should also be regarded as the protection scope of the present disclosure.

## Claims

**1.** A communication method, comprising:
reporting, by a terminal, first information, wherein the first information is configured to indicate a capability of the terminal to support uplink Protocol Data Unit (PDU) set handling.

**2.** The communication method as claimed in claim 1, further comprising:
receiving, by the terminal, Quality of Service (QoS) information of an uplink PDU set transmitted by a first network function, or receiving, by the terminal, the QoS information of the uplink PDU set transmitted by the first network function through a base station; and
performing, by the terminal, the uplink PDU set handling.

**3.** The communication method as claimed in claim 2, further comprising:
transmitting, by the terminal, a first request to the first network function via a Non-Access Stratum (NAS) message, wherein the first request is configured to request QoS information of a PDU set.

**4.** The communication method as claimed in claim 1, further comprising at least one of the following:
performing, by the terminal, the uplink PDU set handling based on QoS information of the uplink PDU set;
performing, by the terminal, the uplink PDU set handling based on the QoS information of the uplink PDU set and protocol description; or
performing, by the terminal, the uplink PDU set handling based on the protocol description.

**5.** The communication method as claimed in claim 4, wherein the protocol description is obtained by the terminal from at least one of the following: the terminal, a business layer, an application layer, and an upper layer.6. A communication method, comprising:
generating, by a second network function, a network policy for uplink Protocol Data Unit (PDU) set handling and/or downlink PDU set handling based on local configuration and/or a capability of a terminal, reported by the terminal, to support the uplink PDU set handling; and
transmitting, by the second network function, the network policy for the uplink PDU set handling and/or the downlink PDU set handling.

**7.** The communication method as claimed in claim 6, wherein the transmitting, by the second network function, the network policy for the uplink PDU set handling and/or the downlink PDU set handling, comprises at least one of the following:
transmitting, by the second network function, the network policy for the uplink PDU set handling to the terminal through a first network function; or
transmitting, by the second network function, the network policy for the uplink PDU set handling to a base station through the first network function.

**8.** The communication method as claimed in claim 6, further comprising:
receiving, by the second network function, second information transmitted by a third network function, or
receiving, by the second network function, the second information transmitted by the third network function through a Network Exposure Function (NEF);
wherein the second information comprises at least one of the following:
first indication information, configured to indicate performing the uplink PDU set handling and/or the downlink PDU set handling;
flow description; or
protocol description.

**9.** The communication method as claimed in claim 8, wherein the third network function is an Application Function (AF).

**10.** The communication method as claimed in claim 6, further comprising:
receiving, by the second network function, a first request transmitted by the terminal through a first network function, wherein the first request is configured to assist the second network function in generating a network policy for the uplink PDU set handling and/or the downlink PDU set handling.

**11.** A communication method, comprising:
transmitting, by a third network function, second information to a second network function;
wherein the second information comprises at least one of the following:
first indication information, configured to indicate performing uplink Protocol Data Unit (PDU) set handling and/or downlink PDU set handling;
flow description; or
protocol description.

**12.** A communication method, comprising:
receiving, by a base station, Quality of Service (QoS) information of an uplink Protocol Data Unit (PDU) set transmitted by a second network function; and
transmitting, by the base station, the QoS information of the uplink PDU set to a terminal.

**13.** A communication apparatus, comprising:
a reporting module, configured to report first information, wherein the first information is configured to indicate a capability of a terminal to support uplink Protocol Data Unit (PDU) set handling.

**14.** A communication apparatus, comprising:
a generation module, configured to generate a network policy for uplink Protocol Data Unit (PDU) set handling and/or downlink PDU set handling based on configuration and/or a capability of a terminal, reported by the terminal, to support the uplink PDU set handling; and
a second transmission module, configured to transmit the network policy for the uplink PDU set handling and/or the downlink PDU set handling.

**15.** A communication apparatus, comprising:
a fourth transmission module, configured to transmit second information to a second network function;
wherein the second information comprises at least one of the following:
first indication information, configured to indicate uplink Protocol Data Unit (PDU) set handling and/or downlink PDU set handling;
flow description; or
protocol description.

**16.** A communication apparatus, comprising:
a third receiving module, configured to receive Quality of Service (QoS) information of an uplink Protocol Data Unit (PDU) set transmitted by a second network function; and
a fifth transmission module, configured to transmit the QoS information of the uplink PDU set to a terminal.

**17.** A communication device, comprising: a processor, a memory, and a program or instruction stored on the memory and executable on the processor; wherein when executed by the processor, the program or instruction is configured to perform operations of the communication method as claimed in any one of claims 1 to 5, or the communication method as claimed in any one of claims 6 to 10, or the communication method as claimed in claim 11, or the communication method as claimed in claim 12 .

**18.** A readable storage medium, configured to store a program or instruction, wherein when executed by a processor, the program or instruction is configured to perform operations of the communication method as claimed in any one of claims 1 to 5, or perform operations of the communication method as claimed in any one of claims 6 to 10, or perform operations of the communication method as claimed in claim 11, or perform operations of the communication method as claimed in claim 12.
